# EUROPÄISCHE PATENTANMELDUNG

(11) **EP 1 348 579 A1**
(43) Veröffentlichungstag der Anmeldung: **01.10.2003**
(21) Anmeldenummer: 03000925.2
(22) Anmeldetag: 16.01.2003
(51) Int. Cl.: B60C 17/04, B60C 17/06

(54) **Notlaufstützkörper eines Fahrzeuges**

(30) Priorität: 25.03.2002 DE 10213299
(71) Anmelder: Continental Aktiengesellschaft, 30165 Hannover (DE)
(72) Erfinder: Kaeder, Ansgar, 31515 Wunstorf (DE); Köhne, Kai-Uwe, 30826 Garbsen (DE); Schürmann, Oliver, 30855 Langenhagen (DE); Charpentier, Yoni, 30159 Hannover (DE); Veit, Ivar, Dr., 64569 Nauheim (DE)

(57) **Zusammenfassung**

Es wird ein Notlaufstützkörper (1) offenbart, welcher innerhalb eines Luftreifens (9), der im Wesentlichen einen Laufstreifen, zwei Seitenwände, eine Karkasse, Verstärkungselemente sowie zwei mit Wulstkernen versehene Reifenwülste aufweist, eines Fahrzeugrades angeordnet ist und sich gegen eine Felge (10) des Fahrzeugrades abstützt, wobei der Notlaufstützkörper eine den Reifen im Schadensfall abstützende Notlauffläche aufweist, die als schalenförmiger Ringkörper (3) ausgebildet ist und im Querschnitt eine mehrfach gekrümmte Kontur mit zwei durch eine Vertiefung (4) voneinander getrennten und nach außen gewölbten Bereichen (11,12) aufweist, wobei an den beiden äußeren Bereichen des schalenförmigen Ringkörpers anschließend nach außen geneigte Stützelemente (2a,2b) vorgesehen sind, die sich neben den Reifenwülsten auf der Felge abstützen. Erfindungsgemäß zeichnet sich der Notlaufskörper dadurch aus, dass wenigstens ein nach außen gewölbter Bereich an seiner Oberfläche mit wenigstens einer buckelartigen Erhebung (13,14) versehen ist, deren axialer Radius größer ist als der axiale Radius des äußeren Bereichs dessen Notlaufstützkörpers.

## Beschreibung

Die Erfindung betrifft einen Notlaufstützkörper gemäß dem Oberbegriff des Patentanspruchs 1.

Derartige Notlaufstützkörper, welche als schalenförmige Ringkörper ausgebildet sind und im Querschnitt eine mehrfach gekrümmte Kontur mit zwei durch eine Vertiefung voneinander getrennten und nach außen gewölbten Bereichen aufweisen, sind aus der DE 197 07 090 A1, der DE 198 25 311 C1 und der DE 101 33 534 bekannt. Derartige Notlaufstützkörper, welche kommerziell beispielsweise für das Kraftfahrzeug "Maybach" der DaimlerChrysler AG verwendet werden, haben sich in der Praxis sehr gut bewährt. Sie dienen dazu, dem Luftreifen bei Kollabieren durch plötzlichen oder schleichenden Luftdruckverlust einen Halt zu geben und eine Weiterfährt über eine Strecke von ca. 100-200 km zu ermöglichen. Derartige Notlaufstützkörper ermöglichen zum einen den Verzicht auf ein Reserverad und zum anderen räumen sie hinlänglich das erhebliche Gefahrenpotenzial des Platzens enes Reifens aus. Denn Reifenplatzer können zu schweren Unfällen mit erheblichen Sach- und Personenschäden führen.

Die Funktionalität ist sogar so gut, dass der Fahrzeugführer u.U. gar nicht bemerkt, dass ein Notlaufzustand eingetreten ist und eine Weiterfahrt des Fahrzeuges möglichst bei verringerter Geschwindigkeit und nur bis zu einer bestimmten Distanz durchgeführt werden sollte. Der Fahrzeuglenker würde das Eintreten des Notlaufzutandes nämlich nur dann bemerken, wenn er vom Normalzutand abweichende Geräusche oder Vibrationen wahrnehmen würde oder wenn das Fahrzeug - was nicht in jedem Fall gegeben sein wird-mit einer Anzeigevorrichtung für einen Luftdruckverlust versehen ist.

In der DE 199 08 701 A1 ist bei einem gattungsgemäßen Notlaufstützkörper schon vorgechlagen worden, diesen mit gleichmäßig über den Umfang verteilten Einbuchtungen zu versehen, in welche sich die Innenseite der Lauffläche des Reifens im Notlauffall eindrücken soll, um dann im Zusammenspiel mit einer veränderten ABS-Vorrichtung und einer Signalverarbeitungseinrichtung zur Raddrehzahl proportionale periodische Schwingungen zu erfassen und dem Fahrer anzeigen zu können. Dies setzt eine entsprechende aufwendige Signalverarbeitungsvorrichtung voraus, welche relativ aufwendig und nicht in jedes Fahrzeug eingebaut werden kann - zumindest nicht nachträglich.

Der Erfindung liegt die Aufgabe zu Grunde, einen Notlaufstützkörper der eingangs geschilderten Art derart anzupassen, dass dem Fahrzeugführer ein Eintritt eines Notlaufzustandes zuverlässig, einfach und auf mechanische Weise angezeigt wird.

Die Aufgabe wird auf überraschend einfache Weise mit einem Notlaufstützkörper gelöst, welcher die Merkmale des Patentanspruchs 1 aufweist.

Erfindungsgemäß ist vorgesehen, dass wenigstens ein nach außen gewölbter Bereich des den Notlaufstützkörper bildenden schalenförmigen Ringkörpers an seiner Oberfläche mit wenigstens einer buckelartigen Erhebung versehen ist, deren axialer Radius größer ist als der axiale Radius des äußeren Bereichs des Notlaufstützkörpers. Kurzgefasst ist der Kern der Erfindung darin zu sehen, dass der Bereich des Notlaufstützkörpers, welcher im Pannenfall in direkten Kontakt mit der Innenseele des Fahrzeugluftreifens kommt, an wenigstens einer Stelle eine Erhebung in Form eines Buckels, einer Hutze, einer Leiste o.dgl. aufweist, welche die sonst vorhandene Rundheit des Notlaufstützkörpers derart unterbricht, dass im Pannenlauffall eine gezielte Unrundheit des Notlaufstützkörpers und damit eingehergehend ein unrunder Lauf des im Pannenfall befindlichen Fahrzeugrades entsteht.

Der unrunde Lauf erzeugt Stöße und Vibrationen, sowie charakteristische Abrollgeräusche, welche dem Fahrer anzeigen, dass sein Fahrzeug vom normalen Betriebszustand abweicht, was ihn zum Anhalten und zum Überprüfen seines Fahrzeuges veranlassen wird. Die Fahrt kann dann bei verringerter Geschwindigkeit fortgesetzt werden, wobei der Fahrer nun weiß, dass das betroffene Fahrzeugrad einer Reparatur bedarf.

In praktischen Ausgestaltungen der Erfindung kann vorgesehen sein, dass beide der nach außen gewölbten Bereiche mit wenigstens einer Erhebung versehen sind, oder dass eine Mehrzahl von Erhebungen auf den nach außen gewölbten Bereichen angeordnet sind, wobei weiter vorgesehen sein kann, dass die Mehrzahl von Erhebungen gleichmäßig oder alternativ ungleichmäßig auf den äußeren Bereichen verteilt sind, wobei weiter vorgesehen sein kann, dass die Länge und die Höhe der Erhebungen jeweils gleich oder - alternativ-dass die Länge wenigstens einer Erhebung von den Längen der weiteren Erhebungen abweichen.

In weiteren praktischen Ausgestaltungen der Erfindung kann vorgesehen sein, dass die Erhebungen jeweils aus einem elastomeren Material bestehen und auf dem gewölbten Bereich aufvulkanisiert sind. Alternativ kann vorgesehen sein, dass die Erhebungen jeweils als Sicke aus dem äußeren Bereich ausgeformt sind. Auch Ausbildungen der Buckel als Kunststoffteil sind denkbar, wobei dieses durch clipsen, nieten, schrauben oder kleben mit dem Ringkörper verbunden werden können.

Bei durchgeführten Erprobungen der Erfindung wurden mechanische Vibrationen im Frequenzbereich 15 - 30 Hz gemessen; akustische Messungen ergaben monofrequente Anregungen in einem Bereich von über 75 Hz.

Die Erfindung wird nachfolgend anhand eines Ausführungsbeispiels in der Zeichnung näher beschrieben, welche zeigt:
- Fig. 1: ein Fahrzeugrad mit erfindungsgemäßem Notlaufstützkörper im Radialschnitt,
- Fig. 2a - c: drei Ausführungsbeispiele des Notlaufstützkörpers im Radialschnitt,
- Fig. 3: den Notlaufstützkörper aus Figur 1 schematisch in Seitenansicht, und
- Fig. 4: ein zweites Ausführungsbeispiel des Notlaufstützkörpers in Seitenansicht.

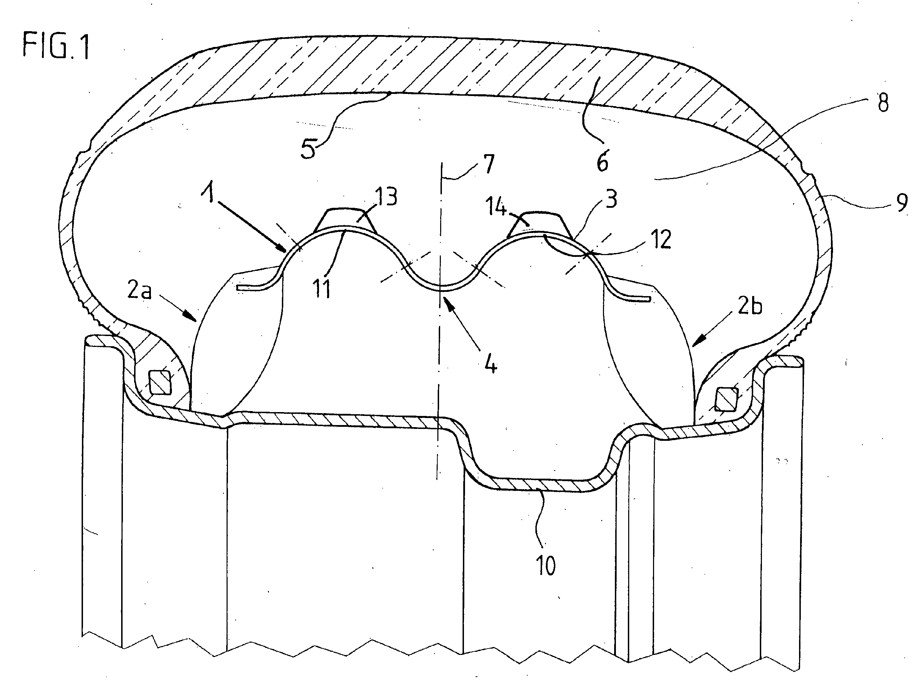

Figur 1 zeigt ein Fahrzeugrad mit erfindungsgemäßem Notlaufstützkörper 1 im Radialschnitt. Der rotationssysmmetrische Notlaufstützkörper 1 ist im Reifenhohlraum 8 des Luftreifens 9 angeordnet und stützt sich über ringförmige Stützelemente 2a und 2b auf einer herkömmlichen Fahrzeugfelge 10 ab. Der Notlaufstützkörper 1 besteht im Wesentlichen aus den elastomeren Stützelementen 2a und 2b sowie dem schalenförmigen Ringkörper 3. Der Ringkörper 3 besteht im gezeigten Ausführungsbeispiel aus einem zusammengefügten Ring aus Stahlblech, kann aber aus anderen geeigneten Materialien bestehen. Im Querschnitt bzw. Radialschnitt weist der Ringkörper 3 eine mehrfach gekrümmte Kontur mit zwei durch eine Vertiefung 4 voneinander getrennten und nach außen gewölbten Bereichen 11,12 auf, wobei die äußeren Bereiche 11,12 nach axial innen in abgewinkelte Endbereiche enden, welche mit den Stützelementen 2a und 2b verbunden sind. Die nach außen gewölbten Bereiche 11,12 des Ringkörpers sind mit buckelartigen Erhebungen 13,14 versehen, welche im gezeigten Ausführungsbeispiel als Leiste ausgebildet sind aus einer relativ harten Gummimischung bestehen, welche jeweils auf den äußeren Bereich aufvulkanisiert sind.

Wenn durch plötzlichen oder schleichenden Druckluftverlust der Luftreifen 9 kollabiert, legt sich eine Innenseele 5 unterhalb des Laufstreifens 6 des Luftreifens 9 an den Ringkörper 3 im Bereich der nach außen gewölbten Bereiche 11,12 an und wird dort vom Stützelement 1 gestützt. Beim Abrollen sorgen die Erhebungen 13,14 dafür, dass der Lauf des Luftreifens 9 gezielt unrund wird, was mit Erschütterungen, Vibrationen und besonderen Abrollgeräuschen verbunden ist, welche dem Fahrer signalisieren, dass ein anormaler Betriebszustand vorliegt.

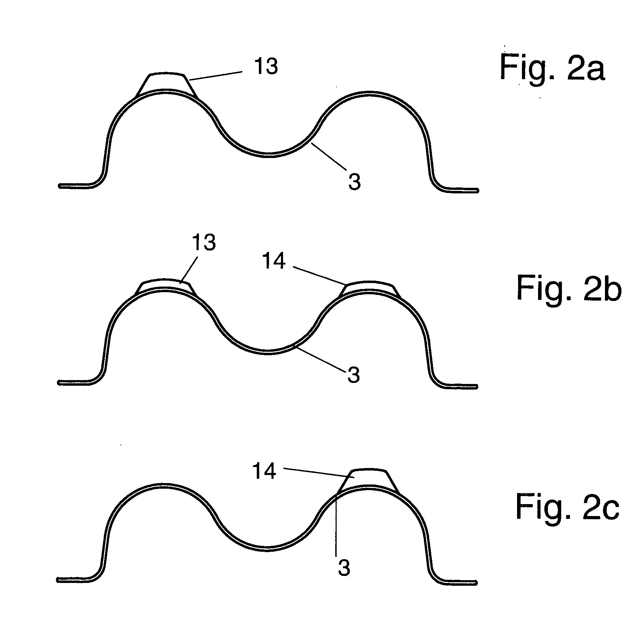

In den Figuren 2a - 2c sind unterschiedliche Ausgestaltungsmöglichkeiten eines Ringkörpers 3 mit Erhebungen 13; 14 dargestellt, jeweils im Radialschnitt. Figur 2a zeigt eine Ausgestaltung mit einer einseitigen Erhebung 13 nur auf der linken Seite, während Figur 2b eine symmetrische Ausgestaltung von zwei Erhebungen 13, 14auf beiden nach außen gewölbten Bereichen 11,12 des Ringkörpers 3zeigt. Figur 2c zeigt eine Ausgestaltung mit einer einseitigen Erhebung 14 nur auf der rechten Seite. Es kann aber auch vorgesehen sein, dass die Erhebungen 13,14 auf beiden Seiten des Ringkörpers 3 bzw. auf beiden Bereichen 11,12 mit einem Versatz zueinander angeordnet sind, so dass die Erhebungen 13;14 auf jeder Seite mit gleichem Abstand zueinander angeordnet sind, aber kein auf gleicher Höhe angeordnetes Äquivalent auf der anderen Seite besitzen.

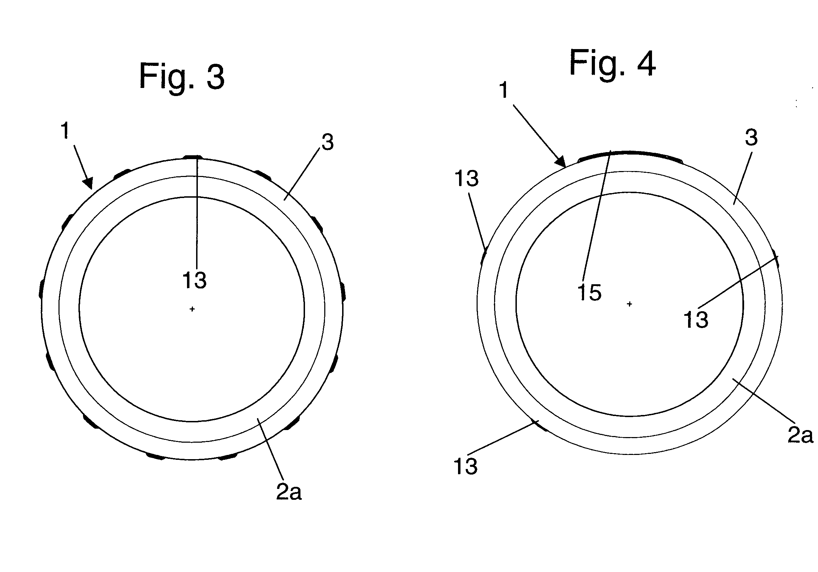

Die Figuren 3 und 4 zeigen zwei unterschiedliche Ausführungsbeispiele des Notlaufstützkörpers 1mit Ringkörper 3 und Stützelement 2a in seitlicher Ansicht. Während das Ausführungsbeispiel gemäß Figur 3 insgesamt 13 Erhebungen 13 aufweist, welche jeweils die gleiche Höhe, Länge und gleichen Abstand zueinander aufweisen, weist das in Figur 4 dargestellte Ausführungsbeispiel des erfindungsgemäßen Notlaufstützkörpers 1 vier Erhebungen 13, 15 auf, wobei drei Erhebungen 13 jeweils gleiche Länge und gleiche Höhe aufweisen, eine andere Erhebung 15 aber länger und höher ist als die drei anderen Erhebungen. In dem in Figur 4 dargestellten Ausführungsbeispiel sind zudem die Abstände der Erhebungen 13,15 zueinander unterschiedlich, so dass die Erhebungen ungleichmäßig um den Notlaufstützkörper 1 herum angeordnet sind, so dass dadurch disharmonische Schwingungen, Vibrationen und Abrollgeräusche erzeugt werden, welche dem Fahrer im besonderen Maße anzeigen werden, dass ein Notlaufzustand eingetreten ist.

### Bezugszeichenliste (ist Teil der Beschreibung)

- 1: Notlaufstützkörper
- 2a,2b: Stützelemente
- 3: Ringkörper
- 4: Vertiefung
- 5: Innenseele
- 6: Laufstreifen
- 7: axiale Mittelachse
- 8: Reifenhohlraum
- 9: Luftreifen
- 10: Fahrzeugfelge
- 11: äußerer Bereich
- 12: äußerer Bereich
- 13,14,15: Erhebung

## Patentansprüche

1. Notlaufstützkörper (1), welcher innerhalb eines Luftreifens (9), der im wesentlichen einen Laufstreifen (6), zwei Seitenwände, eine Karkasse, Verstärkungselemente sowie zwei mit Wulstkernen versehene Reifenwülste aufweist, eines Fahrzeugrades angeordnet ist und sich gegen eine Felge (10) des Fahrzeugrades abstützt, wobei der Notlaufstützkörper (1) eine den Luftreifen (9) im Schadensfall abstützende Notlauffläche aufweist, die als schalenförmiger Ringkörper (3) ausgebildet ist und im Querschnitt eine mehrfach gekrümmte Kontur mit zwei durch eine Vertiefung (4) voneinander getrennten und nach außen gewölbten Bereichen (11,12) aufweist, wobei an den beiden äußeren Bereichen des schalenförmigen Ringkörpers (3) anschließend nach außen geneigte Stützelemente (2a,2b) vorgesehen sind, die sich neben den Reifenwülsten auf der Felge (10) abstützen,
**dadurch gekennzeichnet, dass**
wenigstens ein nach außen gewölbter Bereich (11;12) an seiner Oberfläche mit wenigstens einer buckelartigen Erhebung (13;14;15) versehen ist, deren axialer Radius größer ist als der axiale Radius des äußeren Bereiches (11,12) des Notlaufstützkörpers (1).

2. Notlaufstützkörper nach Anspruch 1, **dadurch gekennzeichnet, dass** beide äußeren Bereiche (11,12)des schalenförmigen Ringkörpers (3) mit wenigstens einer buckelartigen Erhebung (13;14;15) versehen sind.

3. Notlaufstützkörper nach Anspruch 1 oder 2, **dadurch gekennzeichnet, dass** eine Mehrzahl von zueinander beabstandeten Erhebungen (13,14,15) auf den nach außen gewölbten Bereichen (11,12) angeordnet sind.

4. Notlaufstützkörper nach Anspruch 3, **dadurch gekennzeichnet, dass** die Erhebungen (13,14,15) im gleichen Abstand zueinander auf den nach außen gewölbten Bereichen (11,12) angeordnet sind.

5. Notlaufstützkörper nach Anspruch 3, **dadurch gekennzeichnet, dass** der Abstand der Erhebungen(13,14,15) zueinander auf den nach außen gewölbten Bereichen (11,12) ungleichmäßig ist.

6. Notlaufstützkörper nach Anspruch 3, **dadurch gekennzeichnet, dass** die Länge und die Höhe der Erhebungen (13,14,15) jeweils gleich sind.

7. Notlaufstützkörper nach Anspruch 3, **dadurch gekennzeichnet, dass** die Länge wenigstens einer Erhebung (13,14,15) von der Länge wenigstens einer anderen Erhebung abweicht.

8. Notlaufstützkörper nach Anspruch 3, **dadurch gekennzeichnet, dass** die Höhe wenigstens einer Erhebung (13,14,15) von der Höhe wenigstens einer anderen Erhebung (13,14,15) abweicht.

9. Notlaufstützkörper nach einem der vorangegangenen Ansprüche, **dadurch gekennzeichnet, dass** die Erhebung (13,14,15) aus elastomerem Material besteht und auf den Ringkörper (3) aufvulkanisiert ist.

10. Notlaufstützkörper nach einem der Ansprüche 1 bis 8, **dadurch gekennzeichnet, dass** die Erhebung (13,14,15) jeweils als Sicke aus dem Ringkörper (3) ausgeformt ist.
